# EUROPÄISCHE PATENTSCHRIFT

(11) **EP 4 169 665 B1**
(45) Veröffentlichungstag und Bekanntmachung des Hinweises auf die Patenterteilung: **11.12.2024**
(21) Anmeldenummer: 21204296.4
(22) Anmeldetag: 22.10.2021
(51) Int. Cl.: B24B 7/07, B24B 49/12, B23Q 3/18, B23Q 7/06, B23Q 7/03, B23Q 7/08, B24B 41/06, B24B 21/00

(54) **WERKSTÜCKBEFESTIGUNGSVORRICHTUNG, SCHLEIFMASCHINE UND VERFAHREN ZUR BEFESTIGUNG EINES WERKSTÜCKS**
WORKPIECE FIXING DEVICE, GRINDING MACHINE AND METHOD FOR FIXING A WORKPIECE
DISPOSITIF DE FIXATION DE PIÈCE, MACHINE À RECTIFIER ET PROCÉDÉ DE FIXATION D'UNE PIÈCE

(43) Veröffentlichungstag der Anmeldung: 26.04.2023
(73) Patentinhaber: Karl Heesemann Maschinenfabrik GmbH & Co. KG, 32547 Bad Oeynhausen (DE)
(72) Erfinder: Giese, Christoph, 32547 Bad Oeynhausen (DE)
(74) Vertreter: Eisenführ Speiser

(56) Entgegenhaltungen:
- EP-A1- 2 853 406
- EP-A1- 3 375 619
- DE-A1- 19 518 373
- US-A1- 2015 336 406

## Beschreibung

Die Erfindung betrifft eine Werkstückbefestigungsvorrichtung zur Befestigung eines Werkstücks durch Unterdruck für dessen Bearbeitung, die eine Auflagevorrichtung aufweist, an der das Werkstück zur Befestigung aufgelegt werden kann, und mindestens eine Unterdruckkammer aufweist, die ausgehend von der Auflagevorrichtung ausgebildet ist.

Ferner betrifft die Erfindung eine Schleifmaschine und ein Verfahren zur Befestigung eines Werkstücks durch Unterdruck für dessen Bearbeitung mit einer Werkstückbefestigungsvorrichtung.

Es ist bekannt, Werkstücke zur Bearbeitung, beispielsweise mit einer Schleifmaschine, mittels einer Werkstückbefestigungsvorrichtung an einer Auflagevorrichtung zu befestigen. Hierzu kann die Werkstückbefestigungsvorrichtung eine Saugvorrichtung aufweisen. Die Auflagevorrichtung kann eine stationäre Tischeinheit und ein sich relativ zu der Tischeinheit bewegendes Transportband zur Beförderung des zu befestigenden Werkstücks in einer Hauptbearbeitungsrichtung umfassen.

Zur Befestigung des Werkstücks an der Auflagevorrichtung kann diese Saugöffnungen aufweisen, durch welche die Saugvorrichtung Luft ansaugt. Wird nun ein Werkstück auf der Auflagevorrichtung angeordnet, überdeckt es einzelne Saugöffnungen. Je nach Größe des Werkstücks und Verteilung der Saugöffnungen überdeckt das zu bearbeitende Werkstück eine größere oder kleinere Anzahl der Saugöffnungen der Auflagevorrichtung. Je größer das Werkstück oder je enger die Saugöffnungen beabstandet zueinander angeordnet sind, desto größer ist die resultierende Haltekraft, welche die Saugvorrichtung erzeugt.

Bei der Werkstückbearbeitung, beispielsweise mit Durchlaufschleifmaschinen mit Breitbändern oder anderen Bearbeitungseinheiten, wird die Haltekraft für das Werkstück durch die Anzahl der sich im Eingriff befindlichen Saugöffnungen (in Form von Durchgangsbohrungen bzw. Saugkanälen in der Auflagevorrichtung), dem Unterdruck und weiteren Parametern bestimmt. DE 10 2016 117 992 A1, DE 10 2008 059 177 B4, DE 20 2010 013 582 U1, DE 195 18 373 A1, DE 29 39 571 A1, DE 43 07 432 C2, DE 20 2008 004 820 U1 und DE 199 63 461 B4 beschreiben Lösungen, die eine Befestigung von Werkstücken auf einer Auflagevorrichtung mit einer Saugvorrichtung ermöglichen sollen.

Das Europäische Patentamt zitiert im europäischen Recherchenbericht folgende Dokumente: US 2015/336406 A1, DE 195 18 373 A1, EP 2 853 406 A1 und EP 3 375 619 A1.

Allerdings kann es bei diesen Lösungen passieren, dass bei kleineren Werkstücken nicht genügend Saugöffnungen mit dem zu bearbeitenden Werkstück im Eingriff sind, um das Werkstück für die Bearbeitung sicher zu fixieren. Ferner wird bei kleineren Werkstücken die Auflagevorrichtung ungenügend abgedeckt, so dass hohe Vakuumverluste auftreten.

Es ist bekannt dieses Problem durch Werkstückhalterungen zu beheben, die kleinere Werkstücke aufnehmen können. Dies hat allerdings den Nachteil, dass nur kleine oder nur große Werkstücke bearbeitet werden können, ein Mischbetrieb also nicht möglich ist. Die Verwendung solcher Werkstückhalterungen führt daher zu vergleichsweise hohen Rüstkosten und langen Rüstzeiten.

Der Erfindung liegt daher die Aufgabe zugrunde, eine Werkstückbefestigungsvorrichtung, eine Schleifmaschine und ein Verfahren zur Befestigung eines Werkstücks mit einer Werkstückbefestigungsvorrichtung zur Verfügung zu stellen, welche die beschriebenen Nachteile nicht aufweisen.

Gemäß einem Aspekt der Erfindung wird die Aufgabe mit einer Werkstückbefestigungsvorrichtung zur Befestigung eines Werkstücks durch Unterdruck für dessen Bearbeitung nach Anspruch 1 gelöst.

Die Werkstückbefestigungsvorrichtung ist insbesondere eine Werkstückbefestigungsvorrichtung einer Bearbeitungsmaschine. Die Bearbeitungsmaschine ist vorzugsweise eine Schleifmaschine, besonders bevorzugt eine Breitbandschleifmaschine. Die Werkstückbefestigungsvorrichtung ist insofern insbesondere geeignet, Werkstücke für schleifende Bearbeitung zu fixieren.

Die Werkstückbefestigungsvorrichtung weist eine Auflagevorrichtung auf, an der das zu bearbeitende Werkstück zur Befestigung aufgelegt werden kann. Die Auflagevorrichtung kann beispielsweise durch eine oder mehrere Werkstückauflageplatte(n) oder durch eine oder mehrere Werkstückauflagefläche(n) gebildet werden oder diese umfassen. Ferner kann die Auflagevorrichtung beispielsweise durch eine oder mehrere Werkstücktransportbänder gebildet werden oder diese umfassen. Für die Bearbeitung eines Werkstücks wird das Werkstück auf der Auflagevorrichtung angeordnet und an der Auflagevorrichtung fixiert. Zum Fixieren des Werkstücks an der Auflagevorrichtung weist die Auflagevorrichtung vorzugsweise eine Ansaugfläche und eine Absaugfläche auf. Eine Ansaugfläche ist hierbei eine Fläche, an der das zu befestigende Werkstück anliegt und angesaugt wird. Auf der Seite der Ansaugfläche herrscht üblicherweise Atmosphärendruck. Demgegenüber herrscht an der Absaugfläche im Betrieb ein im Vergleich zu dem Atmosphärendruck geringerer Druck. Die Absaugfläche ist insbesondere eine von der Ansaugfläche abgewandte Fläche. Die Auflagevorrichtung erstreckt sich vorzugsweise zwischen der Ansaugfläche für Werkstücke und der Absaugfläche orthogonal zu einer Hauptbearbeitungsrichtung.

Vorzugsweise erstrecken sich die Ansaugfläche und die Absaugfläche der Auflagevorrichtung in einer Ebene. Die Absaugfläche und die Ansaugfläche sind vorzugsweise beabstandet zueinander angeordnet. Insbesondere erstrecken sich die Absaugfläche und die Ansaugfläche parallel zueinander.

Ferner weist die Werkstückbefestigungsvorrichtung mindestens eine Unterdruckkammer auf, die ausgehend von der Auflagevorrichtung ausgebildet ist. Die Absaugfläche kann eine der mindestens einen Unterdruckkammer zugewandte Fläche sein. Die aus der Umgebung auf der Seite der Ansaugfläche angesaugte Luft wird auf der Seite der Absaugfläche in Richtung der mindestens einen Unterdruckkammer abgesaugt. Ferner ist bevorzugt, dass die mindestens eine Unterdruckkammer ausgehend von der Absaugfläche der Auflagevorrichtung ausgebildet ist. Insbesondere ist die Unterdruckkammer an der Auflagevorrichtung angeordnet. Vorzugsweise ist die Unterdruckkammer an der Absaugfläche der Auflagevorrichtung angeordnet. Vorzugsweise bildet die Absaugfläche der Auflagevorrichtung eine Innenwand der Unterdruckkammer aus.

Die mindestens eine Unterdruckkammer weist insbesondere einen geringeren Druck auf als eine Umgebung der Werkstückbefestigungsvorrichtung. Der Druck der Umgebung kann witterungsbedingt variieren. Ein Unterdruck innerhalb der Unterdruckkammerwird vorzugsweise mit einer Saugvorrichtung erzeugt.

Die Werkstückbefestigungsvorrichtung weist einen ersten Befestigungsbereich und einen von dem ersten Befestigungsbereich verschiedenen zweiten Befestigungsbereich auf. In dem ersten Befestigungsbereich weist die Auflagevorrichtung ein erstes Auflagekanalprofil auf. In dem zweiten Befestigungsbereich weist die Auflagevorrichtung ein von dem ersten Auflagekanalprofil verschiedenes zweites Auflagekanalprofil auf.

Als Auflagekanalprofil ist im Sinne der Erfindung die Summe der Merkmale zu verstehen, die durch eine Mehrzahl von Kanälen im jeweiligen Befestigungsbereich und deren Anordnung zueinander gebildet wird. Beispiele solcher Merkmale sind die Kontur der Querschnittfläche eines Kanals (zum Beispiel kreisförmig, länglich, in Form eines Dreiecks, eines Quadrates, eines Kreuzes), insbesondere die Kontur des Querschnitt im Bereich einer Werkstückauflagefläche der Auflagevorrichtung, eine oder mehrere Abmessung dieses Querschnitts, die Abstände der Kanäle zueinander in einer Richtung oder in einer anderen Richtung, die Anzahl der Kanäle pro Fläche, die durch die Kanäle eingenommene Querschnittsfläche im Verhältnis zu der Gesamtfläche, innerhalb derer die Kanäle angeordnet sind. Zumindest eines dieser Merkmale ist im ersten Auflagekanalprofil verschieden vom zweiten Auflagekanalprofil. Vorzugsweise sind die Kanäle eines Auflagekanalprofils identisch ausgebildet.

Das erste und/oder zweite Auflagekanalprofil ist ausgebildet, die Umgebung der Werkstückbefestigungsvorrichtung mit der Unterdruckkammer strömungstechnisch zu verbinden. Das erste und/oder zweite Auflagekanalprofil ist vorzugsweise eine Anordnung von Durchgangsöffnungen, welche die Ansaugseite strömungstechnisch mit der Absaugseite verbinden. Insbesondere weist das erste und/oder zweite Auflagekanalprofil jeweils eine Anordnung mehrerer Kanäle auf, die sich von der Ansaugfläche zu der Absaugfläche erstrecken. Vorzugsweise sind die Kanäle ausgebildet, die Umgebung der Werkstückbefestigungsvorrichtung mit der Unterdruckkammer strömungstechnisch zu verbinden.

Vorzugsweise ist das erste und/oder zweite Auflagekanalprofil als Lochprofil ausgebildet. Ein Lochprofil kann insbesondere Kanäle mit einem kreisrunden Querschnitt und/oder einem polygonalen Querschnitt, vorzugsweise einem quadratischen oder rechteckförmigen Querschnitt, aufweisen. Ferner kann bevorzugt sein, dass das erste und/oder zweite Auflagekanalprofil als Langlochprofil ausgebildet ist. Insbesondere kann das Lochprofil des ersten Auflagekanalprofils von dem Lochprofil des zweiten Auflagekanalprofils verschieden sein. Insbesondere ist bevorzugt, dass der Querschnitt der Kanäle des Lochprofils des ersten Auflagekanalprofils von dem Querschnitt der Kanäle des Lochprofils des zweiten Auflagekanalprofils verschieden ist. Besonders bevorzugt weist das erste Auflagekanalprofil Nuten, insbesondere nutenförmige Kanäle oder als Langloch ausgebildete Kanäle auf, und das zweite Auflagekanalprofil als Bohrungen ausgebildete Kanäle auf. Durch diese Ausführungsform wird in bevorzugter Weise eine wesentlich größere Vakuumspannfläche erzeugt.

Vorzugsweise sind die Kanäle des ersten und/oder zweiten Auflagekanalprofils äquidistant zueinander beabstandet. Es kann bevorzugt sein, dass Kanäle, zumindest teilweise, mit einem variierenden Abstand zueinander beanstandet sind.

Durch die Aufteilung der Werkstückbefestigungsvorrichtung auf den ersten Befestigungsbereich und den von dem ersten Befestigungsbereich verschiedenen zweiten Befestigungsbereich lassen sich unterschiedliche Auflagekanalprofile mit einer variierenden Kanalanzahl und Kanaldichte vorsehen. Hierdurch lässt sich die Anzahl der Kanäle steuern, die mit einem zu fixierenden Werkstück im Eingriff stehen, also von dem auf der Auflagevorrichtung aufliegenden Werkstück verdeckt sind.

Ferner ermöglicht die Aufteilung in verschiedene Befestigungsbereiche, dass je Befestigungsbereich unterschiedliche Unterdrücke in Unterdruckkammern vorgesehen werden können, sofern die Werkstückbefestigungsvorrichtung mehrere Unterdruckkammern aufweist. Insbesondere kann die Unterdruckkammer für einen Befestigungsbereich vollständig deaktiviert werden, wenn in diesem Befestigungsbereich kein Werkstück zu fixieren ist. Unterdruckkammern lassen sich entsprechend zu- und abschalten bzw. Kammervolumina der einzelnen Unterdruckkammern in Abhängigkeit der Werkstückgröße variieren.

Insbesondere lassen sich hierdurch Vakuumverluste in den Unterdruckkammern minimieren.

Gemäß einer bevorzugten Ausführungsform ist vorgesehen, dass die Werkstückbefestigungsvorrichtung eine Schiebervorrichtung aufweist, die in dem ersten Befestigungsbereich angeordnet ist, wobei die Schiebervorrichtung und die Auflagevorrichtung relativ zueinander bewegbar angeordnet sind. Vorzugsweise sind die Schiebervorrichtung und die Auflagevorrichtung relativ zueinander translatorisch und/oder rotatorisch bewegbar angeordnet.

Insbesondere weist die Schiebervorrichtung ein Schieberkanalprofil auf. Das Schieberkanalprofil ist ausgebildet, das erste Auflagekanalprofil der Werkstückbefestigungsvorrichtung mit der Unterdruckkammer strömungstechnisch zu verbinden und/oder zu verschließen. Insbesondere weist die Schiebervorrichtung Kanäle auf, die sich von der Absaugfläche zu der Unterdruckkammer erstrecken. Vorzugsweise sind die Kanäle des Schieberkanalprofils ausgebildet, das erste Auflagekanalprofil der Werkstückbefestigungsvorrichtung mit der Unterdruckkammer strömungstechnisch zu verbinden.

Insbesondere ist die Schiebervorrichtung ausgebildet, das erste Auflagekanalprofil zwischen der Ansaugfläche und der Absaugfläche zumindest abschnittsweise zu variieren. Vorzugsweise ist die Schiebervorrichtung ausgebildet, einzelne oder mehrere Kanäle des ersten Auflagekanalprofils zwischen der Ansaugfläche und der Absaugfläche zumindest abschnittsweise zu variieren. Insbesondere ist die Schiebervorrichtung bevorzugt ausgebildet, Querschnitte einzelner oder mehrerer Kanäle des ersten Auflagekanalprofils zwischen der Ansaugfläche und der Absaugfläche zumindest abschnittsweise zu variieren.

Vorzugsweise ist das Schieberkanalprofil als Lochprofil ausgebildet. Ein Lochprofil kann insbesondere Kanäle mit einem kreisrunden Querschnitt und/oder einem polygonalen Querschnitt, vorzugsweise einem quadratischen oder rechteckförmigen Querschnitt, aufweisen. Ferner kann bevorzugt sein, dass das Schieberkanalprofil als Lochprofil ausgebildet ist. Vorzugsweise sind die Kanäle des Schieberkanalprofils äquidistant zueinander beabstandet. Es kann bevorzugt sein, dass Kanäle, zumindest teilweise, mit einem variierenden Abstand zueinander beanstandet sind.

Vorzugsweise ist die Schiebervorrichtung orthogonal zu der Hauptbearbeitungsrichtung relativ zu der Auflagevorrichtung verschiebbar. Insbesondere ist die Schiebervorrichtung in einer Ebene parallel zu der Auflagevorrichtung, insbesondere der Ansaugfläche und/oder Absaugfläche verschiebbar. Vorzugsweise ist die Schiebervorrichtung zwischen der Ansaugfläche und Absaugfläche angeordnet.

In einer bevorzugten Ausführung der Werkstückbefestigungsvorrichtung erstreckt sich die Schiebervorrichtung über den ersten Befestigungsbereich. Besonders bevorzugt erstreckt sich die Schiebervorrichtung über einen oder mehrere Teilbereiche des ersten Befestigungsbereichs. Die Schiebervorrichtung ist insbesondere ausgebildet, das erste Auflagekanalprofil zumindest abschnittsweise zu variieren. Insbesondere kann bevorzugt sein, dass die Schiebervorrichtung ausgebildet ist, einzelne Kanäle des ersten Auflagekanalprofils strömungstechnisch zu verschließen.

Mittels der Schiebervorrichtung lässt sich in Abhängigkeit der Werkstückgröße ein geeignetes Saugprofil festlegen. Insbesondere ermöglicht die Schiebervorrichtung, den in der mindestens einen Unterdruckkammer resultierenden Unterdruck zu variieren. Ferner lässt sich in bevorzugter Weise die Strömungsgeschwindigkeit von aus der Umgebung angesaugter Luft durch einzelne Kanäle des ersten Auflagekanalprofils steuern. Dies ermöglicht einerseits, Werkstücke für die Bearbeitung optimal zu fixieren und andererseits Verlustleistung zu minimieren. Ferner lässt sich die Werkstückbefestigungsvorrichtung ohne große Rüstzeiten und Rüstkosten an die Größe des zu bearbeitenden Werkstücks anpassen.

Nach einer weiteren bevorzugten Fortbildung der Werkstückbefestigungsvorrichtung sind die Schiebervorrichtung und/oder die Auflagevorrichtung ausgebildet, relativ zueinander zwischen einer ersten Schieberposition und einer von der ersten verschiedenen zweiten Schieberposition hin und her bewegt zu werden. Insbesondere sind die Schiebervorrichtung und/oder die Auflagevorrichtung ausgebildet, translatorisch und/oder rotatorisch relativ zueinander zwischen der ersten Schieberposition und der zweiten Schieberposition hin und her bewegt zu werden. Dabei bilden die Schiebervorrichtung und die Auflagevorrichtung in der ersten Schieberposition der Schiebervorrichtung ein erstes Sauglochprofil aus und in der zweiten Schieberposition der Schiebervorrichtung ein von dem ersten Sauglochprofil verschiedenes zweites Sauglochprofil. Vorzugweise ist das erste Sauglochprofil das erste Auflagekanalprofil.

Als Sauglochprofil ist im Sinne der Erfindung insbesondere die Summe der Merkmale zu verstehen, die durch eine Mehrzahl von Kanälen durch das Zusammenspiel der Position der Schiebervorrichtung in Bezug zu der Auflagevorrichtung und deren Anordnung zueinander gebildet wird. Beispiele solcher Merkmale sind die Kontur der Querschnittfläche eines Kanals (zum Beispiel kreisförmig, länglich, in Form eines Dreiecks, eines Quadrates, eines Kreuzes), insbesondere die Kontur des Querschnitt im Bereich einer Werkstückauflagefläche der Auflagevorrichtung und/oder der Schiebervorrichtung, eine oder mehrere Abmessung dieses Querschnitts, die Abstände der Kanäle zueinander in einer Richtung oder in einer anderen Richtung, die Anzahl der Kanäle pro Fläche, die durch die Kanäle eingenommene Querschnittsfläche im Verhältnis zu der Gesamtfläche, innerhalb derer die Kanäle angeordnet sind. Zumindest eines dieser Merkmale ist in dem ersten Sauglochprofil verschieden vom zweiten Sauglochprofil. Vorzugsweise sind die Kanäle eines Sauglochprofil identisch ausgebildet

Diese bevorzugte Ausführungsform hat den Vorteil, dass das Sauglochprofil in Abhängigkeit der Größe der zu bearbeitenden Werkstücke angepasst werden kann. Insbesondere lassen sich mit dieser bevorzugten Ausführungsform Werkstücke unterschiedlicher Größe gleichzeitig auf der Werkstückbefestigungsvorrichtung fixieren. Dies reduziert einerseits den Rüstaufwand und beschleunigt andererseits die Bearbeitung von Werkstücken durch die parallele bzw. gleichzeitige Bearbeitung der Werkstücke.

Ferner ist in einer bevorzugten Fortbildung vorgesehen, dass die Schiebervorrichtung eine oder mehrere Schiebeeinheiten aufweist, die ausgebildet sind, abhängig oder unabhängig voneinander relativ zu der Auflagevorrichtung zwischen der ersten Schieberposition und der zweiten Schieberposition hin und her bewegt zu werden. Vorzugsweise sind die eine oder mehrere Schiebeeinheiten ausgebildet, abhängig oder unabhängig voneinander relativ zu der Auflagevorrichtung zwischen der ersten Schieberposition und der zweiten Schieberposition translatorisch und/oder rotatorisch hin und her bewegt zu werden.

Vorzugsweise lässt sich mit einer Schiebereinheit das erste Auflagekanalprofil anders variieren als mit einer weiteren Schiebereinheit. Beispielsweise kann bevorzugt sein, dass die eine Schiebereinheit derart verschoben wurde, dass das erste Auflagekanalprofil abschnittsweise einen ersten Querschnitt aufweist, der kleiner ist als ein resultierender Querschnitt, der sich durch das Verschieben einer anderen Schiebereinheit ergibt.

Insbesondere ist die Schiebervorrichtung ausgebildet, das erste Auflagekanalprofil zwischen der Ansaugfläche und der Absaugfläche zumindest abschnittsweise zu variieren. Vorzugsweise ist die Schiebervorrichtung ausgebildet, einzelne oder mehrere Kanäle des ersten Auflagekanalprofils zwischen der Ansaugfläche und der Absaugfläche zumindest abschnittsweise zu variieren. Insbesondere ist die Schiebervorrichtung bevorzugt ausgebildet, Querschnitte einzelner oder mehrerer Kanäle des ersten Auflagekanalprofils zwischen der Ansaugfläche und der Absaugfläche zumindest abschnittsweise zu variieren.

Insbesondere sind die eine Schiebeeinheit oder die mehreren Schiebeeinheiten ausgebildet, zwischen der ersten Schieberposition und der zweiten Schieberposition kontinuierlich hin und her bewegt zu werden. Dies hat den Vorteil, dass die eine Schiebeeinheit oder die mehreren Schiebeeinheiten besonders genau verschoben werden können. Es kann auch bevorzugt sein, dass die eine Schiebeeinheit oder die mehreren Schiebeeinheiten ausgebildet sind, zwischen der ersten Schieberposition und der zweiten Schieberposition in diskreten Schritten hin und her bewegt zu werden. Dies hat den Vorteil, dass die eine Schiebeeinheit oder die mehreren Schiebeeinheiten besonders einfach verschoben werden können.

Gemäß einer weiteren bevorzugten Ausführungsform der Werkstückbefestigungsvorrichtung weist das erste Auflagekanalprofil im Vergleich zu dem zweiten Auflagekanalprofil pro Flächeneinheit eine höhere Anzahl Saugkanäle auf. Insbesondere ist der Querschnitt der Kanäle des ersten Auflagekanalprofils kleiner als der Querschnitt der Kanäle des zweiten Auflagekanalprofils.

Nach einer ferner bevorzugten Fortbildung ist vorgesehen, dass der erste Befestigungsbereich im Vergleich zu dem zweiten Befestigungsbereich eine kleinere flächige Erstreckung aufweist. Hierdurch lassen sich insbesondere kleinere Werkstücke besonders effizient fixieren.

Gemäß einer weiteren bevorzugten Fortbildung erstrecken sich der erste Befestigungsbereich und der zweite Befestigungsbereich in einer Hauptbearbeitungsrichtung des zu bearbeitenden Werkstücks über dieselbe Länge. Ergänzend oder alternativ erstreckt sich der erste Befestigungsbereich orthogonal zu der Hauptbearbeitungsrichtung über eine geringere Breite als der zweite Befestigungsbereich.

Ferner ist in einer bevorzugten Ausführungsform eine Sensorvorrichtung vorgesehen, die ausgebildet ist, ein auf der Auflagevorrichtung angeordnetes Werkstück zu erfassen, wobei die Sensorvorrichtung vorzugsweise ausgebildet ist, eine Lage und/oder eine Lageänderung und/oder einen Lagebereich und/oder eine Größe und/oder eine Länge und/oder eine Breite und/oder eine Höhe des Werkstücks auf der Auflagevorrichtung, insbesondere auf einer Ansaugfläche der Auflagevorrichtung, zu erfassen, auf dem das auf der Auflagevorrichtung angeordnete Werkstück aufliegt.

Zur Erfassung der Lageänderung kann die Sensorvorrichtung beispielsweise ausgebildet sein, die Lage oderdie Position des Werkstücks auf der Auflagevorrichtung zu unterschiedlichen Zeitpunkten zu erfassen. Weichen die zu den unterschiedlichen Zeitpunkten erfassten Lagen oder Positionen des Werkstücks voneinander ab, liegt eine Lageänderung vor. Ein bevorzugter Schwellwert einer Lageänderung des Werkstücks ist beispielsweise mindestens 0,01mm, mindestens 0,05mm, mindestens 1mm, mindestens 5mm, mindestens 10mm oder mehr. Weist die Auflagevorrichtung etwa eine Transporteinheit auf, auf der das Werkstück in einer Hauptbearbeitungsrichtung mit einer Transportgeschwindigkeit transportiert wird, ist die Lageänderung des Werkstücks unter Berücksichtigung der Transportgeschwindigkeit und der Transportrichtung des Werkstücks zu bestimmen.

Wird eine Lageänderung mit der Sensorvorrichtung erfasst, kann die Saugleistung der Saugvorrichtung erhöht werden, so dass eine weitere Lageänderung des auf der Auflagevorrichtung angeordneten Werkstücks verhindert wird.

Es kann bevorzugt sein, dass die Sensorvorrichtung mehrere Sensoreinheiten aufweist, die das an der Auflagevorrichtung angeordnete Werkstück erfassen. Insbesondere ist bevorzugt, dass mehrere Sensoreinheiten beabstandet zueinander angeordnet sind. Vorzugsweise sind die Sensoreinheiten in der Hauptbearbeitungsrichtung und/oder orthogonal zu der Hauptbearbeitungsrichtung beabstandet zueinander angeordnet.

Die Sensorvorrichtung, insbesondere die Sensoreinheiten, sind beispielsweise als Zeilenkamera ausgebildet. Insbesondere kommen als Sensorvorrichtung, besonders bevorzugt als Sensoreinheiten, solche Sensoren und/oder Kameras in Betracht, die ausgebildet sind, einer Lageänderung des Werkstücks von mindestens 0,01mm, mindestens 0,05mm, mindestens 1mm, mindestens 5mm, mindestens 10mm oder mehr zu erfassen.

Die Sensorvorrichtung ermöglicht, die Schiebervorrichtung und/oder die Unterdruckkammer in Abhängigkeit der Größe und der Anzahl an zu befestigenden Werkstücken anzusteuern. Dies ermöglicht in besonders einfacher Weise ein effizientes Fixieren von Werktücken, insbesondere von kleineren Werkstücken.

Weiterhin ist vorgesehen, dass die mindestens eine Unterdruckkammer ein Kammervolumen aufweist, das größenveränderlich ausgebildet ist, wobei das Kammervolumen zwischen einem ersten Kammervolumen und einem von dem ersten verschiedenen zweiten Kammervolumen veränderbar ist. Vorzugsweise ist das Kammervolumen der mindestens einen Unterdruckkammer in Abhängigkeit des von der Sensorvorrichtung erfassten Lagebereichs und/oder in Abhängigkeit der von der Sensorvorrichtung erfassten Größe und/oder Länge und/oder Breite und/oder Höhe des Werkstücks veränderbar.

Ferner ist in einer bevorzugten Fortbildung der Werkstückbefestigungsvorrichtung vorgesehen, dass die mindestens eine Unterdruckkammer eine Trennwandvorrichtung aufweist, die ausgebildet ist, das Kammervolumen der mindestens einen Unterdruckkammer zwischen dem ersten Kammervolumen und dem zweiten Kammervolumen zu verändern.

Nach einer weiteren bevorzugten Ausführungsform weist die Werkstückbefestigungsvorrichtung eine Betätigungsvorrichtung auf, die ausgebildet ist, die Trennwandvorrichtung zwischen einer ersten Stellposition und einer von der ersten verschiedenen zweiten Stellposition zu positionieren. Vorzugsweise weist die mindestens eine Unterdruckkammer in der ersten Stellposition der Trennwandvorrichtung das erste Kammervolumen auf und in der zweiten Stellposition der Trennwandvorrichtung das zweite Kammervolumen.

In einer weiteren bevorzugten Fortbildung ist die Betätigungsvorrichtung als manuell betätigte Betätigungsvorrichtung und/oder als automatisiert betätigte Betätigungsvorrichtung ausgebildet.

Ferner weist eine bevorzugte Fortbildung der Werkstückbefestigungsvorrichtung eine Saugvorrichtung zur Erzeugung eines Unterdrucks in der Unterdruckkammer auf. Die Sensorvorrichtung ist vorzugsweise in Transportrichtung des Werkstücks vor und/oder nach der Saugvorrichtung angeordnet.

Ferner ist für eine bevorzugte Fortbildung der Werkstückbefestigungsvorrichtung eine Steuerungsvorrichtung vorgesehen, die signaltechnisch mit der Sensorvorrichtung und/oder der Betätigungsvorrichtung und/oder Trennwandvorrichtung und/oder der Saugvorrichtung verbunden ist.

Weiterhin ist bei einer bevorzugten Ausführungsform der Werkstückbefestigungsvorrichtung vorgesehen, dass die Auflagevorrichtung eine stationäre Tischeinheit und/oder eine Transporteinheit aufweist, welche ausgebildet ist, das zu bearbeitende Werkstück in der Hauptbearbeitungsrichtung zu transportieren. Vorzugsweise weist die stationäre Tischeinheit ein Längsmusterprofil auf. Ergänzend oder alternativ ist bevorzugt, dass die Transporteinheit ein Lochmusterprofil aufweist. Ferner ist ergänzend oder alternativ in bevorzugter Weise vorgesehen, dass die Transporteinheit relativ bewegbar zu der Tischeinheit angeordnet ist.

In einer weiteren Fortbildung der Werkstückbefestigungsvorrichtung ist vorgesehen, dass die Transporteinheit ein Transportband oder ein Transportteppich ist, wobei das Transportband oder der Transportteppich vorzugsweise endlos ausgebildet ist.

Gemäß einem weiteren Aspekt wird die Aufgabe mit einer Schleifmaschine nach Anspruch 13 gelöst.

Die Schleifmaschine ist vorzugsweise eine Breitbandschleifmaschine. Die Schleifmaschine umfasst eine Werkstückbefestigungsvorrichtung. Die Werkstückbefestigungsvorrichtung umfasst einzelne Merkmale oder eine Kombination von Merkmalen der zuvor beschriebenen Werkstückbefestigungsvorrichtung.

Gemäß einer bevorzugten Ausführungsform der Schleifmaschine weist diese wenigstens ein Schleifaggregat zur Bearbeitung eines mit der Werkstückbefestigungsvorrichtung befestigten Werkstücks auf.

Gemäß einem weiteren Aspekt wird die Aufgabe mit einem Verfahren zur Befestigung eines Werkstücks mit einer Werkstückbefestigungsvorrichtung nach Anspruch 14 gelöst.

Das Verfahren zur Befestigung eines Werkstücks mit einer Werkstückbefestigungsvorrichtung umfassend folgende Schritte:
- Erfassen eines auf einer Auflagevorrichtung angeordneten Werkstücks; und
- Zuordnen des erfassten Werkstücks zu einem ersten oder zu einem von dem ersten verschiedenen zweiten Befestigungsbereich.

Ferner ist vorgesehen, dass das Verfahren folgende Schritte umfasst:
- Einstellen einer Größe eines Kammervolumens von mindestens einer Unterdruckkammer in Abhängigkeit des erfassten Werkstücks; und
- Einstellen eines Sauglochprofils in der Auflagevorrichtung in dem zugeordneten Befestigungsbereich in Abhängigkeit des erfassten Werkstücks, und/oder
- Einstellen einer Saugleistung einer Saugvorrichtung in Abhängigkeit einer erfassten Lageänderung des Werkstücks.

Gemäß einer bevorzugten Fortbildung des Verfahrens ist das Einstellen der Saugleistung der Saugvorrichtung ein Erhöhen der Saugleistung, wenn die Lageänderung des Werkstücks oberhalb eines Schwellwertes liegt.

Es soll verstanden werden, dass die Werkstückbefestigungsvorrichtung gemäß dem einen Aspekt der Erfindung die Schleifmaschine und das Verfahren zur Befestigung eines Werkstücks mit einer Werkstückbefestigungsvorrichtung gemäß den weiteren Aspekten der Erfindung gleiche und ähnliche Unteraspekte aufweisen, wie insbesondere in den abhängigen Ansprüchen niedergelegt. Insofern wird vollumfänglich auf die obige Beschreibung Bezug genommen.

Ausführungsformen der Erfindung werden nun nachfolgend anhand der Zeichnungen beschrieben. Diese sollen die Ausführungsformen nicht notwendigerweise maßstäblich darstellen, vielmehr sind die Zeichnungen, wo zur Erläuterung dienlich, in schematisierter und/oder leicht verzerrter Form ausgeführt. Im Hinblick auf Ergänzungen der aus den Zeichnungen unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in den Zeichnungen sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, den Zeichnungen und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsformen oder beschränkt auf einen Gegenstand, der eingeschränkt wäre im Vergleich zu dem in den Ansprüchen beanspruchten Gegenstand. Der Einfachheit halber sind nachfolgend für identische oder ähnliche Teile oder Teile mit identischer oder ähnlicher Funktion gleiche Bezugszeichen verwendet.

Bevorzugte Ausführungsformen der Erfindung werden beispielhaft anhand der beiliegenden Figuren erläutert.
- Figur 1: zeigt eine isometrische Ansicht einer bevorzugten Ausführungsform einer Werkstückbefestigungsvorrichtung;
- Figur 2: zeigt eine Draufsicht auf ein Transportband der in Figur 1 dargestellten Werk-stückbefestigungsvorrichtung;
- Figur 3: zeigt eine Detailansicht auf eine Tischeinheit der in Figur 1 dargestellten Werkstückbefestigungsvorrichtung;
- Figur 4: zeigt eine Schnittansicht einer weiteren bevorzugten Ausführungsform einer Werkstückbefestigungsvorrichtung, die auf der in Figur 1 dargestellten Aus-führungsform der Werkstückbefestigungsvorrichtung basiert; und
- Figur 5: zeigt ein schematisches Ablaufdiagramm einer bevorzugten Ausführungsform eines Verfahrens zur Befestigung eines Werkstücks mit einer Werkstückbe-festigungsvorrichtung.

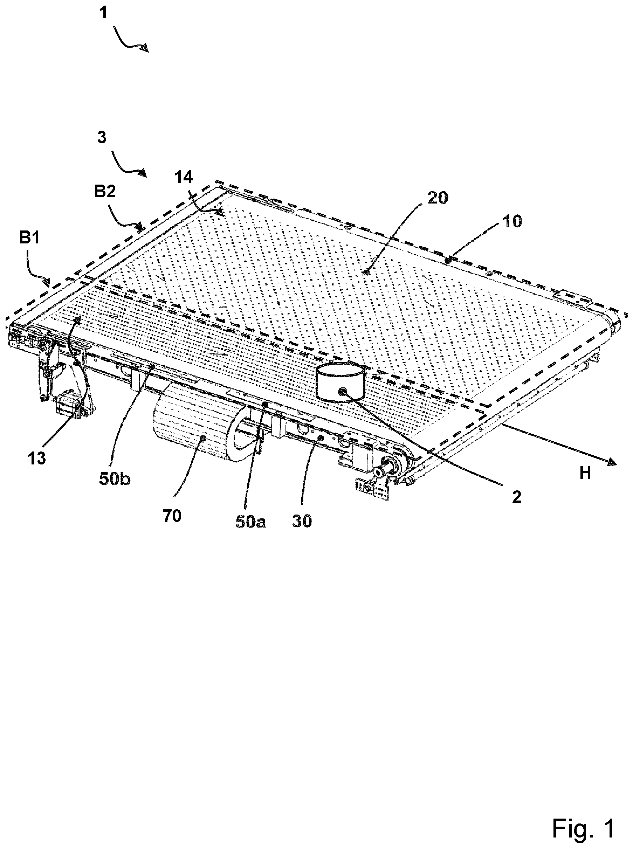

Figur 1 zeigt in einer isometrischen Ansicht eine bevorzugte Ausführungsform einer Werkstückbefestigungsvorrichtung 1 zur Befestigung eines Werkstücks 2 für dessen Bearbeitung. Eine Schleifmaschine (nicht dargestellt), beispielsweise eine Breitbandschleifmaschine, kann mit einer solchen Werkstückbefestigungsvorrichtung 1 Werkstücke 2 für deren Bearbeitung befestigen.

Die Werkstückbefestigungsvorrichtung 1 weist eine Auflagevorrichtung 3 auf. Die Auflagevorrichtung 3 umfasst in dieser bevorzugten Ausführungsform eine stationäre Tischeinheit 10 und eine Transporteinheit 20. Die Transporteinheit 20 ist relativ bewegbar zu der Tischeinheit 10 angeordnet und als endloses Transportband oder endloser Transportteppich ausgebildet. Für die Bearbeitung des Werkstücks fördert die Transporteinheit 20 das zu bearbeitende Werkstück 2 in einer Hauptbearbeitungsrichtung H entlang eines Bearbeitungsaggregats, beispielsweise eines Schleifaggregats (nicht dargestellt). Hierzu wird das zu bearbeitende Werkstück zunächst auf der Auflagevorrichtung 3, bzw. vorliegend der Transporteinheit 20, angeordnet.

Die Auflagevorrichtung 3 erstreckt sich zwischen einer Ansaugfläche 11 und einer Absaugfläche 12. Das zu bearbeitende Werkstück 2 wird für die Bearbeitung auf die Ansaugfläche 11 der Auflagevorrichtung 3 aufgelegt und dort fixiert. Zum Fixieren des Werkstücks 2 auf der Auflagevorrichtung 3 weist die Werkstückbefestigungsvorrichtung 1 eine Unterdrucckammer 30 auf, die sich ausgehend von der Absaugfläche 12 der Auflagevorrichtung 3 erstreckt. Über einen Vakuumanschluss 70 wird in der Unterdruckkammer 30 ein Unterdruck erzeugt, mit dem durch die Ansaugfläche 11 Luft aus der Umgebung angesaugt wird.

Hieraus resultiert ein Unterruck, der das Werkstück 2 an die Ansaugfläche 11 ansaugt. Der Vakuumanschluss 70 ist mit einer Saugvorrichtung (nicht dargestellt) strömungstechnisch verbunden, welche die Luft ansaugt.

In Figur 1 ist zu erkennen, dass die Werkstückbefestigungsvorrichtung 1 einen ersten Befestigungsbereich B1 und einen von dem ersten Befestigungsbereich B1 verschiedenen zweiten Befestigungsbereich B2 aufweist. Der erste Befestigungsbereich B1 weist im Vergleich zu dem zweiten Befestigungsbereich B2 eine kleinere flächige Erstreckung auf. Dabei erstrecken sich der erste und zweite Befestigungsbereich B1, B2 in der Hauptbearbeitungsrichtung H des zu bearbeitenden Werkstücks 2 über dieselbe Länge. Allerdings weist der erste Befestigungsbereich B1 im Vergleich zum zweiten Befestigungsbereich B2 orthogonal zu der Haupterstreckungsrichtung eine geringere Breite auf.

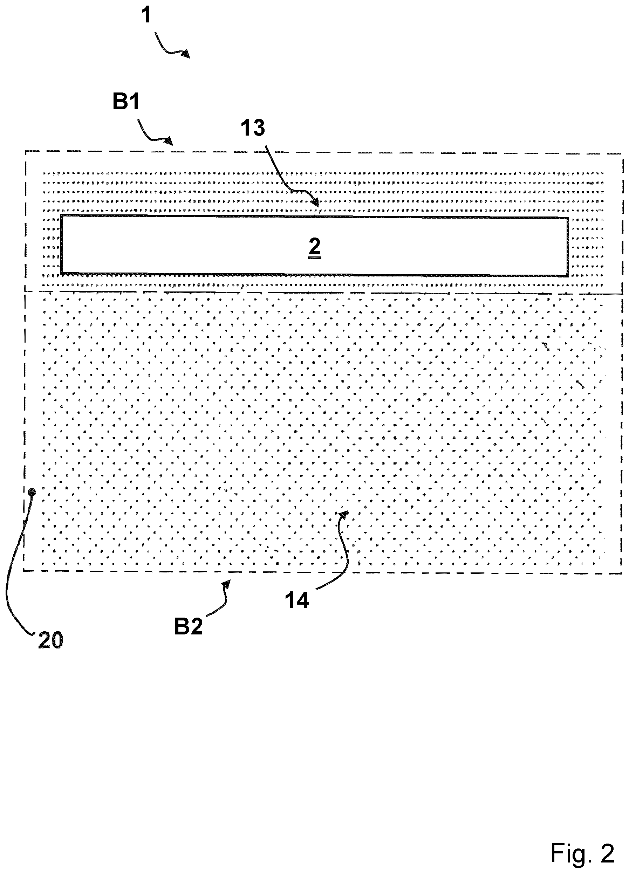

Es ist vorgesehen, dass die Auflagevorrichtung 3 in dem ersten Befestigungsbereich B1 ein erstes Auflagekanalprofil 13 aufweist und in dem zweiten Befestigungsbereich B2 ein von dem ersten Auflagekanalprofil 13 verschiedenes zweites Auflagekanalprofil 14 aufweist. Das erste Auflagekanalprofil 13 weist im Vergleich zu dem zweiten Auflagekanalprofil 14 eine wesentlich feinteiligere Anordnung der Kanäle auf, durch welche Luft angesaugt wird. Dies verdeutlicht auch Figur 2, die eine Draufsicht auf ein Transportband der in Figur 1 dargestellten Werkstückbefestigungsvorrichtung 1 zeigt, auf welchem ein längliches Werkstück 2 fixiert ist. Im Wesentlichen weist das erste Auflagekanalprofil 13 im Vergleich zu dem zweiten Auflagekanalprofil 14 pro Flächeneinheit eine höhere Anzahl Saugkanäle auf.

Die Auflagevorrichtung 3 der in Figur 1 dargestellten Ausführungsform weist in dem ersten Befestigungsbereich B1 eine Schiebervorrichtung 50 auf. Die Schiebervorrichtung 50 ist zwischen und relativ verschiebbar zu der Transporteinheit 20 und der Tischeinheit 10 angeordnet. In dem vorliegenden Ausführungsbeispiel lässt sich die Schiebervorrichtung 50 gegenüber der Auflagevorrichtung 3 relativ zwischen einer ersten Schieberposition und einer von der ersten verschiedenen zweiten Schieberposition hin und her bewegen. Dabei bildet die Schiebervorrichtung 50 im Zusammenspiel mit der Auflagevorrichtung 3 in der ersten Schieberposition ein erstes Sauglochprofil aus und in der zweiten Schieberposition ein von dem ersten Sauglochprofil verschiedenes zweites Sauglochprofil.

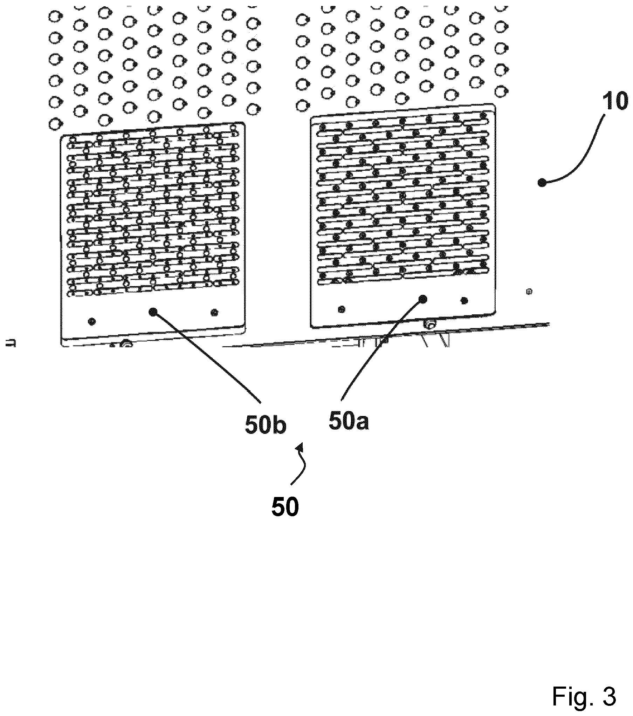

Die in Figur 1 dargestellte Schiebervorrichtung 50 umfasst zwei Schiebeeinheiten 50a, 50b, die ausgebildet sind, unabhängig voneinander relativ zu der Auflagevorrichtung 3 zwischen der ersten Schieberposition und der zweiten Schieberposition hin und her bewegt zu werden. Dies zeigt die Detailansicht in Figur 3 auf die Tischeinheit 10 der in Figur 1 dargestellten Werkstückbefestigungsvorrichtung 1. Die rechts angeordnete Schiebeeinheit 50a befindet sich in einer ersten Schieberposition, die zur Befestigung größerer Werkstücke 2 ausgebildet ist. Die links angeordnete Schiebeeinheit 50b befindet sich in einer zweiten Schieberposition, die zur Befestigung kleinerer Werkstücke 2 geeignet ist.

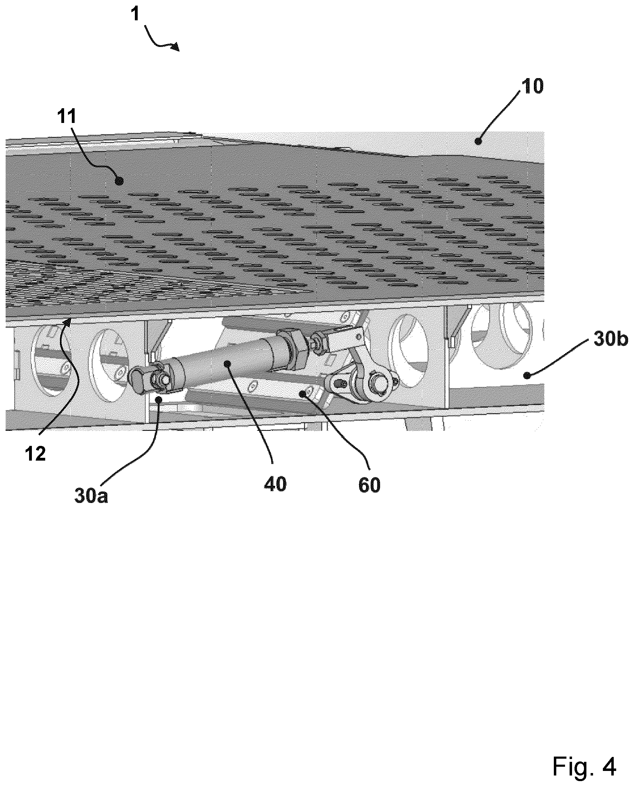

Figur 4 zeigt eine Schnittansicht einer weiteren bevorzugten Ausführungsform einer Werkstückbefestigungsvorrichtung 1, die auf der in Figur 1 dargestellten Ausführungsform der Werkstückbefestigungsvorrichtung 1 basiert. Die in Figur 4 dargestellte Ausführungsform unterscheidet sich von der in Figur 1 dargestellten Ausführungsform durch den Einsatz von zwei Unterdruckkammern 30a, 30b, wobei eine der beiden Unterdruckkammern 30a ein Kammervolumen aufweist, das größenveränderlich ausgebildet ist. Das Kammervolumen dieser Unterdruckkammer 30a kann zwischen einem ersten Kammervolumen und einem von dem ersten verschiedenen zweiten Kammervolumen verändert werden. Zur Veränderung des Kammervolumens weist die Unterdruckkammer 30a eine Trennwandvorrichtung 60 auf, die zwischen einer ersten Stellposition und einer von der ersten verschiedenen zweiten Stellposition positioniert werden kann. Hierdurch lässt sich das Kammervolumen der Unterdruckkammer 30a zwischen einem ersten Kammervolumen an der ersten Stellposition und einem zweiten Kammervolumen an der zweiten Stellposition einstellen.

Um die Trennwandvorrichtung 60 zwischen der ersten und zweiten Stellposition zu positionieren, umfasst die in Figur 4 dargestellte Ausführungsform der Werkstückbefestigungsvorrichtung 1 eine Betätigungsvorrichtung 40. Die Betätigungsvorrichtung 40 kann für eine manuelle Betätigung oder-wie vorliegend vorgesehen - für eine automatisierte Betätigung ausgebildet sein.

Für die automatisierte Betätigung der Betätigungsvorrichtung 40 weist die Werkstückbefestigungsvorrichtung 1 eine Sensorvorrichtung (nicht dargestellt) und eine Steuerungsvorrichtung (nicht dargestellt) auf.

Die Sensorvorrichtung ist ausgebildet, ein auf der Auflagevorrichtung 3 angeordnetes Werkstück 2 zu erfassen. Vorliegend ist die Sensorvorrichtung ausgebildet, einen Lagebereich, eine Größe, eine Länge, eine Breite und eine Höhe des Werkstücks 2 auf der Ansaugfläche 11 der Auflagevorrichtung 3 zu erfassen, auf dem das auf der Auflagevorrichtung 3 angeordnete Werkstück 2 aufliegt. Insbesondere ist die Sensorvorrichtung auch ausgebildet, eine Lageänderung des auf der Auflagevorrichtung 3 angeordneten Werkstücks 2 zu erfassen. Hierzu ist vorgesehen, die Lage des Werkstücks zu unterschiedlichen Zeitpunkten zu erfassen und unter Berücksichtigung der Transportgeschwindigkeit und der Transportrichtung miteinander abzugleichen. Ergibt der Abgleich, dass die zu unterschiedlichen Zeitpunkten erfassten Lagen nicht identisch sind, liegt eine Lageänderung des Werkstücks vor. Dies kann in der vorliegend dargestellten bevorzugten Ausführungsform beispielsweise bewirken, dass die Saugleistung der Saugvorrichtung erhöht wird.

Die Steuerungsvorrichtung ist signaltechnisch mit der Sensorvorrichtung, der Betätigungsvorrichtung 40, der Trennwandvorrichtung 60 und der Saugvorrichtung verbunden. Die Steuerungsvorrichtung ist ausgebildet, in Abhängigkeit des von der Sensorvorrichtung erfassten Lagebereichs bzw. der von der Sensorvorrichtung erfassten Größe, Länge, Breite und Höhe des Werkstücks 2 das Kammervolumen der Unterdruckkammer 30a einzustellen.

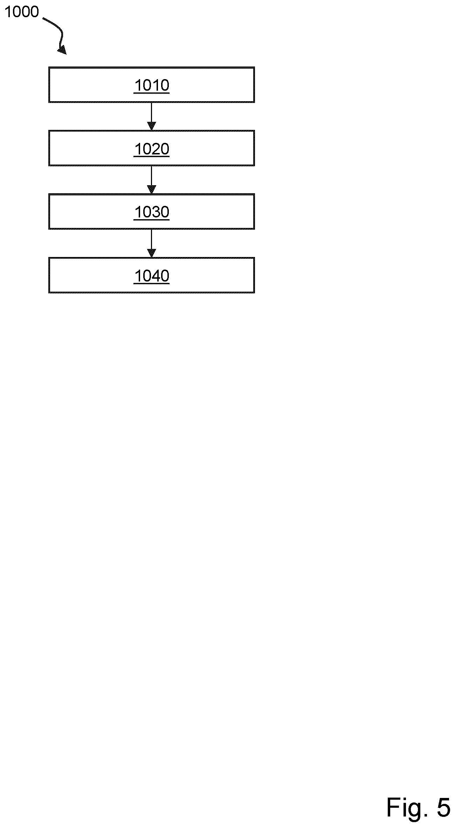

Figur 5 zeigt ein schematisches Ablaufdiagramm einer bevorzugten Ausführungsform eines Verfahrens 1000 zur Befestigung eines Werkstücks 2 mit einer Werkstückbefestigungsvorrichtung 1.

Das Verfahren 1000 umfasst in der vorliegend dargestellten Ausführungsform als Schritte ein Erfassen 1010 eines auf einer Auflagevorrichtung 3 angeordneten Werkstücks 2 und ein Zuordnen 1020 des erfassten Werkstücks 2 zu einem ersten oder zu einem von dem ersten verschiedenen zweiten Befestigungsbereich B1, B2. Ferner umfasst das Verfahren 1000 ein Einstellen 1030 einer Größe eines Kammervolumens von mindestens einer Unterdruckkammer 30, 30a, 30b in Abhängigkeit des erfassten Werkstücks 2 und ein Einstellen 1040 eines Sauglochprofils in der Auflagevorrichtung 3 in dem zugeordneten Befestigungsbereich B1, B2 in Abhängigkeit des erfassten Werkstücks 2.

### Bezugszeichenliste

- 1: Werkstückbefestigungsvorrichtung
- 2: Werkstück
- 3: Auflagevorrichtung
- 10: Tischeinheit
- 11: Ansaugfläche
- 12: Absaugfläche
- 13: erstes Auflagekanalprofil
- 14: zweites Auflagekanalprofil
- 20: Transporteinheit, Transportband, Transportteppich
- 30, 30a,b: Unterdruckkammer
- 40: Betätigungsvorrichtung
- 50: Schiebervorrichtung
- 50a,b: Schiebeeinheiten
- 60: Trennwandvorrichtung
- 70: Vakuumanschluss
- B1, B2: erster, zweiter Befestigungsbereich
- H: Hauptbearbeitungsrichtung

## Patentansprüche

1. Werkstückbefestigungsvorrichtung (1) zur Befestigung eines Werkstücks (2) durch Unterdruck für dessen Bearbeitung, die Werkstückbefestigungsvorrichtung (1) aufweisend:
- eine Auflagevorrichtung (3), an der das Werkstück (2) zur Befestigung aufgelegt werden kann, und
- mindestens eine Unterdruckkammer (30, 30a, 30b), die ausgehend von der Auflagevorrichtung (3) ausgebildet ist,
- die Auflagevorrichtung (3) einen ersten Befestigungsbereich (B1) und einen von dem ersten Befestigungsbereich (B1) verschiedenen zweiten Befestigungsbereich (B2) aufweist, wobei
- die Auflagevorrichtung (3) in dem ersten Befestigungsbereich (B1) ein erstes Auflagekanalprofil (13) aufweist und in dem zweiten Befestigungsbereich (B2) ein von dem ersten Auflagekanalprofil (13) verschiedenes zweites Auflagekanalprofil (14) aufweist,
**dadurch gekennzeichnet, dass**
- die mindestens eine Unterdruckkammer (30, 30a, 30b) ein Kammervolumen aufweist, das größenveränderlich ausgebildet ist, wobei das Kammervolumen zwischen einem ersten Kammervolumen und einem von dem ersten verschiedenen zweiten Kammervolumen veränderbar ist.

2. Werkstückbefestigungsvorrichtung (1) nach dem vorhergehenden Anspruch 1, aufweisend eine Schiebervorrichtung (50), die in dem ersten Befestigungsbereich (B1) angeordnet ist, wobei die Schiebervorrichtung (50) und die Auflagevorrichtung (3) relativ zueinander bewegbar angeordnet sind, wobei
vorzugsweise die Schiebervorrichtung (50) und die Auflagevorrichtung (3) relativ zueinander translatorisch und/oder rotatorisch bewegbar angeordnet sind.

3. Werkstückbefestigungsvorrichtung (1) nach einem der vorhergehenden Ansprüche 1 oder 2,
- wobei die Schiebervorrichtung (50) und/oder die Auflagevorrichtung (3) ausgebildet sind, relativ zueinander zwischen einer ersten Schieberposition und einer von der ersten verschiedenen zweiten Schieberposition hin und her bewegt zu werden, insbesondere translatorisch und/oder rotatorisch relativ zueinander zwischen der ersten Schieberposition und der zweiten Schieberposition hin und her bewegt zu werden,
- wobei die Schiebervorrichtung (50) und die Auflagevorrichtung (3) in der ersten Schieberposition der Schiebervorrichtung (50) ein erstes Sauglochprofil ausbilden und in der zweiten Schieberposition der Schiebervorrichtung (50) ein von dem ersten Sauglochprofil verschiedenes zweites Sauglochprofil ausbilden,
- wobei vorzugweise das erste Sauglochprofil das erste Auflagekanalprofil (13) ist.

4. Werkstückbefestigungsvorrichtung (1) nach einem der vorhergehenden Ansprüche 2-3, wobei die Schiebervorrichtung (50) eine oder mehrere Schiebeeinheiten (50a, 50b) aufweist, die ausgebildet sind, abhängig oder unabhängig voneinander relativ zu der Auflagevorrichtung (3) zwischen der ersten Schieberposition und der zweiten Schieberposition hin und her bewegt zu werden, wobei
vorzugsweise die eine oder mehrere Schiebeeinheiten (50a, 50b) ausgebildet sind, abhängig oder unabhängig voneinander relativ zu der Auflagevorrichtung (3) zwischen der ersten Schieberposition und der zweiten Schieberposition translatorisch und/oder rotatorisch hin und her bewegt zu werden.

5. Werkstückbefestigungsvorrichtung (1) nach einem der vorhergehenden Ansprüche 1-4, wobei das erste Auflagekanalprofil (13) im Vergleich zu dem zweiten Auflagekanalprofil (14) pro Flächeneinheit eine höhere Anzahl Saugkanäle aufweist, und/oder
wobei der erste Befestigungsbereich (B1) im Vergleich zu dem zweiten Befestigungsbereich (B2) eine kleinere flächige Erstreckung aufweist.

6. Werkstückbefestigungsvorrichtung (1) nach dem vorhergehenden Anspruch 5, wobei
- sich der erste Befestigungsbereich (B1) und der zweite Befestigungsbereich (B2) in einer Hauptbearbeitungsrichtung (H) des zu bearbeitenden Werkstücks (2) über dieselbe Länge erstrecken; und/oder
- sich der erste Befestigungsbereich (B1) orthogonal zu der Hauptbearbeitungsrichtung (H) über eine geringere Breite erstreckt als der zweite Befestigungsbereich (B2).

7. Werkstückbefestigungsvorrichtung (1) nach einem der vorhergehenden Ansprüche 1-6, aufweisend eine Sensorvorrichtung, die ausgebildet ist, ein auf der Auflagevorrichtung (3) angeordnetes Werkstück (2) zu erfassen,
wobei die Sensorvorrichtung vorzugsweise ausgebildet ist, eine Lage und/oder eine Lageänderung und/oder einen Lagebereich und/oder eine Größe und/oder eine Länge und/oder eine Breite und/oder eine Höhe des Werkstücks (2) auf der Auflagevorrichtung (3), insbesondere auf einer Ansaugfläche (11) der Auflagevorrichtung (3), zu erfassen, auf dem das auf der Auflagevorrichtung (3) angeordnete Werkstück (2) aufliegt.

8. Werkstückbefestigungsvorrichtung (1) nach einem der vorhergehenden Ansprüche 1-7, wobei das Kammervolumen der mindestens einen Unterdruckkammer (30, 30a, 30b) in Abhängigkeit des von der Sensorvorrichtung erfassten Lagebereichs und/oder in Abhängigkeit der von der Sensorvorrichtung erfassten Größe und/oder Länge und/oder Breite und/oder Höhe des Werkstücks (2) veränderbar ist,
und/oder wobei die mindestens eine Unterdruckkammer (30, 30a, 30b) eine Trennwandvorrichtung (60) aufweist, die ausgebildet ist, das Kammervolumen der mindestens einen Unterdruckkammer (30, 30a, 30b) zwischen dem ersten Kammervolumen und dem zweiten Kammervolumen zu verändern.

9. Werkstückbefestigungsvorrichtung (1) nach dem vorhergehenden Anspruch 8, aufweisend eine Betätigungsvorrichtung (40), die ausgebildet ist, die Trennwandvorrichtung (60) zwischen einer ersten Stellposition und einer von der ersten verschiedenen zweiten Stellposition zu positionieren,
wobei vorzugsweise die mindestens eine Unterdruckkammer (30, 30a, 30b) in der ersten Stellposition der Trennwandvorrichtung (60) das erste Kammervolumen aufweist und in der zweiten Stellposition der Trennwandvorrichtung (60) das zweite Kammervolumen aufweist.

10. Werkstückbefestigungsvorrichtung (1) nach dem vorhergehenden Anspruch 9, wobei die Betätigungsvorrichtung (40)
- als manuell betätigte Betätigungsvorrichtung (40) ausgebildet ist und/oder
- als automatisiert betätigte Betätigungsvorrichtung (40) ausgebildet ist.

11. Werkstückbefestigungsvorrichtung (1) nach einem der vorhergehenden Ansprüche 7 und/oder 8 bis 10, aufweisend eine Saugvorrichtung zur Erzeugung eines Unterdrucks in der Unterdruckkammer (30, 30a, 30b) mit einer Saugleistung, und/oder aufweisend eine Steuerungsvorrichtung, die signaltechnisch mit der Sensorvorrichtung und/oder der Betätigungsvorrichtung (40) und/oder der Trennwandvorrichtung (60) und/oder der Saugvorrichtung verbunden ist.

12. Werkstückbefestigungsvorrichtung (1) nach einem der vorhergehenden Ansprüche 1-11,
- die Auflagevorrichtung (3) aufweisend;
∘ eine stationäre Tischeinheit (10); und/oder
∘ eine Transporteinheit (20) aufweist, welche ausgebildet ist, das zu bearbeitende Werkstück (2) in der Hauptbearbeitungsrichtung (H) zu transportieren;
- wobei vorzugsweise
o die stationäre Tischeinheit (10) ein Längsmusterprofil aufweist; und/oder
∘ die Transporteinheit (20) relativ bewegbar zu der Tischeinheit (10) angeordnet ist; und/oder
∘ die Transporteinheit (20) ein Lochmusterprofil aufweist,
- wobei vorzugsweise die Transporteinheit (20) ein Transportband oder ein Transportteppich ist,
wobei das Transportband oder der Transportteppich vorzugsweise endlos ausgebildet ist.

13. Schleifmaschine, insbesondere Breitbandschleifmaschine, umfassend eine Werkstückbefestigungsvorrichtung (1) nach einem der vorhergehenden Ansprüche 1-12, und
aufweisend wenigstens ein Schleifaggregat zur Bearbeitung eines mittels der Werkstückbefestigungsvorrichtung (1) befestigten Werkstücks (2).

14. Verfahren (1000) zur Befestigung eines Werkstücks (2) durch Unterdruck für dessen Bearbeitung mit einer Werkstückbefestigungsvorrichtung (1), insbesondere einer Werkstückbefestigungsvorrichtung (1) nach einem der vorhergehenden Ansprüche, das Verfahren umfassend folgende Schritte:
- Erfassen (1010) eines auf einer Auflagevorrichtung (3) angeordneten Werkstücks (2); und
- Zuordnen (1020) des erfassten Werkstücks (2) zu einem ersten oder zu einem von dem ersten verschiedenen zweiten Befestigungsbereich (B1, B2); und
- Einstellen (1030) einer Größe eines Kammervolumens von mindestens einer Unterdruckkammer (30, 30a, 30b) in Abhängigkeit des erfassten Werkstücks (2); und
- Einstellen (1040) eines Sauglochprofils in der Auflagevorrichtung (3) in dem zugeordneten Befestigungsbereich (B1, B2) in Abhängigkeit des erfassten Werkstücks (2); und/oder
- Einstellen einer Saugleistung einer Saugvorrichtung in Abhängigkeit einer erfassten Lageänderung des Werkstücks (2).

15. Verfahren nach dem vorhergehenden Anspruch 14,
- wobei das Einstellen der Saugleistung der Saugvorrichtung umfasst:
o Erhöhen der Saugleistung, wenn die Lageänderung des Werkstücks (2) oberhalb eines Schwellwertes liegt.

## Claims

1. Workpiece fastening device (1) for fastening a workpiece (2) by means of a vaccuum for its processing, the workpiece fastening device (1) comprising:
- a support device (3) on which the workpiece (2) can be placed for fastening, and
- at least one vacuum chamber (30, 30a, 30b), which is formed starting from the support device (3),
- the support device (3) having a first fastening region (B1) and a second fastening region (B2) which is different from the first fastening region (B1), wherein
- the support device (3) having a first support channel profile (13) in the first fastening region (B1) and a second support channel profile (14) in the second fastening region (B2), which differs from the first support channel profile (13), **characterised in that**
- the at least one vacuum chamber (30, 30a, 30b) has a chamber volume which is variable in size, the chamber volume being variable between a first chamber volume and a second chamber volume which differs from the first chamber volume.

2. Workpiece fastening device (1) according to the preceding claim 1, comprising a slider device (50) which is arranged in the first fastening region (B1), the slider device (50) and the support device (3) being arranged so as to be movable relative to one another, wherein
preferably the slider device (50) and the support device (3) are arranged so as to be movable relative to one another translationally and/or rotationally.

3. Workpiece fastening device (1) according to one of the preceding claims 1 or 2,
- wherein the slider device (50) and/or the support device (3) are designed to be moved back and forth relative to one another between a first slider position and a second slider position different from the first, in particular to be moved back and forth translationally and/or rotationally relative to one another between the first slider position and the second slider position,
- wherein the slider device (50) and the support device (3) form a first suction hole profile in the first slider position of the slider device (50) and form a second suction hole profile different from the first suction hole profile in the second slider position of the slider device (50),
- wherein the first suction hole profile is preferably the first support channel profile (13).

4. Workpiece fastening device (1) according to one of the preceding claims 2-3, wherein the slider device (50) comprises one or more slider units (50a, 50b) which are designed to be moved back and forth between the first slider position and the second slider position depending on or independently of one another relative to the support device (3), wherein
preferably the one or more slider units (50a, 50b) are designed to be moved back and forth translationally and/or rotationally relative to the support device (3) between the first slider position and the second slider position, depending on or independently of one another.

5. Workpiece fastening device (1) according to one of the preceding claims 1-4, wherein the first support channel profile (13) has a higher number of suction channels per unit area compared to the second support channel profile (14), and/or wherein the first fastening region (B1) has a smaller surface area compared to the second fastening region (B2).

6. Workpiece fastening device (1) according to the preceding claim 5, wherein
- the first fastening region (B1) and the second fastening region (B2) extend over the same length in a main processing direction (H) of the workpiece (2) to be machined; and/or
- the first fastening region (B1) extends orthogonally to the main processing direction (H) over a smaller width than the second fastening region (B2).

7. Workpiece fastening device (1) according to one of the preceding claims 1-6, comprising a sensor device which is designed to detect a workpiece (2) arranged on the support device (3),
wherein the sensor device is preferably designed to detect a position and/or a change in position and/or a position range and/or a size and/or a length and/or a width and/or a height of the workpiece (2) on the support device (3), in particular on a suction surface (11) of the support device (3), on which the workpiece (2) arranged on the support device (3) bears.

8. Workpiece fastening device (1) according to one of the preceding claims 1-7, wherein the chamber volume of the at least one vacuum chamber (30, 30a, 30b) is variable as a function of the position range detected by the sensor device and/or as a function of the size and/or length and/or width and/or height of the workpiece (2) detected by the sensor device,
and/or wherein the at least one vacuum chamber (30, 30a, 30b) has a partition wall device (60) which is designed to change the chamber volume of the at least one vacuum chamber (30, 30a, 30b) between the first chamber volume and the second chamber volume.

9. Workpiece fastening device (1) according to the preceding claim 8, comprising an actuating device (40) which is designed to position the partition wall device (60) between a first actuating position and a second actuating position different from the first,
wherein preferably the at least one vacuum chamber (30, 30a, 30b) has the first chamber volume in the first setting position of the partition wall device (60) and has the second chamber volume in the second setting position of the partition wall device (60).

10. Workpiece fastening device (1) according to the preceding claim 9, wherein the actuating device (40)
- is designed as a manually operated actuating device (40) and/or
- is designed as an automatically operated actuating device (40).

11. Workpiece fastening device (1) according to one of the preceding claims 7 and/or 8 to 10, comprising a suction device for generating a vacuum in the vacuum chamber (30, 30a, 30b) with a suction power, and/or
comprising a control device which is connected by signalling to the sensor device and/or the actuating device (40) and/or the partition wall device (60) and/or the suction device.

12. Workpiece fastening device (1) according to any of the preceding claims 1-11,
- having the support device (3);
∘ a stationary table unit (10); and/or
∘ has a transport unit (20) which is designed to transport the workpiece (2) to be processed in the main processing direction (H);
- wherein preferably
∘ the stationary table unit (10) has a longitudinal pattern profile; and/or
∘ the transport unit (20) is arranged so as to be movable relative to the table unit (10); and/or
∘ the transport unit (20) has a perforated pattern profile,
- wherein the transport unit (20) is preferably a conveyor belt or a transport carpet,
wherein the conveyor belt or the conveyor carpet is preferably endless.

13. A grinding machine, in particular a wide belt grinding machine, comprising a workpiece fastening device (1) according to any one of the preceding claims 1-12, and comprising at least one grinding unit for machining a workpiece (2) fastened by means of the workpiece fastening device (1).

14. Method (1000) for fastening a workpiece (2) by negative pressure for machining it with a workpiece fastening device (1), in particular a workpiece fastening device (1) according to one of the preceding claims, the method comprising the following steps:
- gripping (1010) of a workpiece (2) arranged on a support device (3); and
- assigning (1020) the detected workpiece (2) to a first or to a second fastening region (B1, B2) different from the first; and
- adjusting (1030) a size of a chamber volume of at least one vacuum chamber (30, 30a, 30b) depending on the detected workpiece (2); and
- adjusting (1040) a suction hole profile in the support device (3) in the associated fastening area (B1, B2) as a function of the detected workpiece (2); and/or
- adjusting a suction power of a suction device depending on a detected change in position of the workpiece (2).

15. Method according to the preceding claim 14,
- wherein the adjustment of the suction power of the suction device includes:
∘ increasing the suction power if the change in position of the workpiece (2) is above a threshold value.

## Revendications

1. Dispositif de fixation de pièce (1) pour la fixation d'une pièce (2) par dépression pour l'usinage de celle-ci, le dispositif de fixation de pièce (1) présentant :
- un dispositif de support (3), sur lequel la pièce (2) peut être posée pour la fixation, et
- au moins une chambre à dépression (30, 30a, 30b), qui est réalisée à partir du dispositif de support (3),
- le dispositif de support (3) présente une première zone de fixation (B1) et une deuxième zone de fixation (B2) différente de la première zone de fixation (B1), dans lequel
- le dispositif de support (3) présente, dans la première zone de fixation (B1), un premier profil de canal de support (13) et présente, dans la deuxième zone de fixation (B2), un deuxième profil de canal de support (14) différent du premier profil de canal de support (13),
**caractérisé en ce que**
- l'au moins une chambre à dépression (30, 30a, 30b) présente un volume de chambre, qui est réalisé de manière variable en grandeur, dans lequel le volume de chambre peut être modifié entre un premier volume de chambre et un deuxième volume de chambre différent du premier.

2. Dispositif de fixation de pièce (1) selon la revendication précédente 1, présentant un dispositif de coulissement (50), qui est disposé dans la première zone de fixation (B1), dans lequel le dispositif de coulissement (50) et le dispositif de support (3) sont disposés de manière mobile l'un par rapport à l'autre, dans lequel
de préférence le dispositif de coulissement (50) et le dispositif de support (3) sont disposés de manière mobile en translation et/ou en rotation l'un par rapport à l'autre.

3. Dispositif de fixation de pièce (1) selon l'une quelconque des revendications précédentes 1 ou 2,
- dans lequel le dispositif de coulissement (50) et/ou le dispositif de support (3) sont réalisés pour être déplacés en va-et-vient l'un par rapport à l'autre entre une première position de coulissement et une deuxième position de coulissement différente de la première, en particulier pour être déplacés en va-et-vient en translation et/ou en rotation l'un par rapport à l'autre entre la première position de coulissement et la deuxième position de coulissement,
- dans lequel le dispositif de coulissement (50) et le dispositif de support (3) dans la première position de coulissement du dispositif de coulissement (50) réalisent un premier profil de trou d'aspiration et, dans la deuxième position de coulissement du dispositif de coulissement (50), un deuxième profil de trou d'aspiration différent du premier profil de trou d'aspiration,
- dans lequel de préférence le premier profil de trou d'aspiration est le premier profil de canal de support (13).

4. Dispositif de fixation de pièce (1) selon l'une quelconque des revendications précédentes 2-3, dans lequel le dispositif de coulissement (50) présente une ou plusieurs unités coulissantes (50a, 50b), qui sont réalisées pour être amenées en va-et-vient en fonction ou indépendamment les unes des autres par rapport au dispositif de support (3) entre la première position de coulissement et la deuxième position de coulissement, dans lequel
de préférence les une ou plusieurs unités coulissantes (50a, 50b) sont réalisées pour être déplacées en va-et-vient en translation et/ou en rotation en fonction ou indépendamment les unes des autres par rapport au dispositif de support (3) entre la première position de coulissement et la deuxième position de coulissement.

5. Dispositif de fixation de pièce (1) selon l'une quelconque des revendications précédentes 1-4, dans lequel le premier profil de canal de support (13) présente, en comparaison avec le deuxième profil de canal de support (14), par unité de surface un nombre plus élevé de canaux d'aspiration, et/ou
dans lequel la première zone de fixation (B1) présente, en comparaison avec la deuxième zone de fixation (B2), une étendue plane plus petite.

6. Dispositif de fixation de pièce (1) selon la revendication précédente 5, dans lequel
- la première zone de fixation (B1) et la deuxième zone de fixation (B2) s'étendent, dans une direction d'usinage principale (H) de la pièce (2) à usiner, sur la même longueur ; et/ou
- la première zone de fixation (B1) s'étend perpendiculairement à la direction d'usinage principale (H) sur une largeur plus petite que la deuxième zone de fixation (B2).

7. Dispositif de fixation de pièce (1) selon l'une quelconque des revendications précédentes 1-6, présentant un dispositif de capteur, qui est réalisé pour détecter une pièce (2) disposée sur le dispositif de support (3),
dans lequel le dispositif de capteur de préférence est réalisé pour détecter une situation et/ou une modification de situation et/ou une zone de situation et/ou une grandeur et/ou une longueur et/ou une largeur et/ou une hauteur de la pièce (2) sur le dispositif de support (3), en particulier sur une surface d'aspiration (11) du dispositif de support (3) sur laquelle repose la pièce (2) disposée sur le dispositif de support (3).

8. Dispositif de fixation de pièce (1) selon l'une quelconque des revendications précédentes 1-7, dans lequel le volume de chambre de l'au moins une chambre à dépression (30, 30a, 30b) peut être modifié en fonction de la zone de situation détectée par le dispositif de capteur et/ou en fonction de la grandeur et/ou longueur et/ou largeur et/ou hauteur de la pièce (2) détectée par le dispositif de capteur,
et/ou dans lequel l'au moins une chambre à dépression (30, 30a, 30b) présente un dispositif de paroi de séparation (60), qui est réalisé pour modifier le volume de chambre de l'au moins une chambre à dépression (30, 30a, 30b) entre le premier volume de chambre et le deuxième volume de chambre.

9. Dispositif de fixation de pièce (1) selon la revendication précédente 8, présentant un dispositif d'actionnement (40), qui est réalisé pour positionner le dispositif de paroi de séparation (60) entre une première position de réglage et une deuxième position de réglage différente de la première,
dans lequel de préférence l'au moins une chambre à dépression (30, 30a, 30b) présente, dans la première position de réglage du dispositif de paroi de séparation (60), le premier volume de chambre et présente, dans la deuxième position de réglage du dispositif de paroi de séparation (60), le deuxième volume de chambre.

10. Dispositif de fixation de pièce (1) selon la revendication précédente 9, dans lequel le dispositif d'actionnement (40)
- est réalisé en tant que dispositif d'actionnement (40) actionné manuellement et/ou
- est réalisé en tant que dispositif d'actionnement (40) actionné de manière automatique.

11. Dispositif de fixation de pièce (1) selon l'une quelconque des revendications précédentes 7 et/ou 8 à 10, présentant un dispositif d'aspiration pour la production d'une dépression dans la chambre à dépression (30, 30a, 30b) avec une puissance d'aspiration, et/ou
présentant un dispositif de commande, qui est relié par technique de signaux au dispositif de capteur et/ou au dispositif d'actionnement (40) et/ou au dispositif de paroi de séparation (60) et/ou au dispositif d'aspiration.

12. Dispositif de fixation de pièce (1) selon l'une quelconque des revendications précédentes 1-11,
- le dispositif de support (3) présentant :
o une unité de table fixe (10) ; et/ou
o présente une unité de transport (20), laquelle est réalisée pour transporter la pièce (2) à usiner dans la direction d'usinage principale (H) ;
- dans lequel de préférence
o l'unité de table fixe (10) présente un profil de motif longitudinal ; et/ou
o l'unité de transport (20) est disposée de manière relativement mobile par rapport à l'unité de table (10) ; et/ou
o l'unité de transport (20) présente un profil de motif à trous,
- dans lequel de préférence l'unité de transport (20) est une bande de transport ou un tapis de transport,
dans lequel la bande de transport ou le tapis de transport est réalisé(e) de préférence sans fin.

13. Ponceuse, en particulier ponceuse à larges bandes, comprenant un dispositif de fixation de pièce (1) selon l'une quelconque des revendications précédentes 1-12, et
présentant au moins un groupe de ponçage pour l'usinage d'une pièce (2) fixée au moyen du dispositif de fixation de pièce (1).

14. Procédé (1000) pour la fixation d'une pièce (2) par dépression, pour l'usinage de celle-ci, avec un dispositif de fixation de pièce (1), en particulier un dispositif de fixation de pièce (1) selon l'une quelconque des revendications précédentes, le procédé comprenant les étapes suivantes :
- la détection (1010) d'une pièce (2) disposée sur un dispositif de support (3) ; et
- l'association (1020) de la pièce (2) détectée à une première ou à une deuxième zone de fixation (B1, B2) différente de la première ; et
- le réglage (1030) d'une grandeur d'un volume de chambre d'au moins une chambre à dépression (30, 30a, 30b) en fonction de la pièce (2) détectée ; et
- le réglage (1040) d'un profil de trou d'aspiration dans le dispositif de support (3) dans la zone de fixation (B1, B2) associée en fonction de la pièce (2) détectée ; et/ou
- le réglage d'une puissance d'aspiration d'un dispositif d'aspiration en fonction d'une modification de position détectée de la pièce (2).

15. Procédé selon la revendication précédente 14,
- dans lequel le réglage de la puissance d'aspiration du dispositif d'aspiration comprend :
o l'augmentation de la puissance d'aspiration, lorsque la modification de position de la pièce (2) se situe au-dessus d'une valeur de seuil.
